## Europäisches Patentamt

## European Patent Office

## Office européen des brevets

(11) Veröffentlichungsnummer: **0 282 447**
**A1**

## (12) EUROPÄISCHE PATENTANMELDUNG

(21) Anmeldenummer: **88810121.9**

(22) Anmeldetag: **29.02.88**

(51) Int. Cl.⁴: **H 02 B 1/20**
**H 01 R 29/00**

(30) Priorität: **02.03.87 CH 789/87**

(43) Veröffentlichungstag der Anmeldung:
**14.09.88 Patentblatt 88/37**

(84) Benannte Vertragsstaaten:
**CH DE FR GB IT LI**

(71) Anmelder: **C.A. Weidmüller GmbH & Co.**
**Klingenbergstrasse 16**
**D-4930 Detmold (DE)**

(72) Erfinder: **Herold, Rainer**
**Weidenweg 62**
**D-4010 Hilden (DE)**

(74) Vertreter: **Ryffel, Rolf**
**c/o Hepp Ryffel AG Bahnhofstrasse 58**
**CH-8001 Zürich (CH)**

(54) **Elektrische Schalteinheit mit mehreren Schaltgeräten.**

㊄ Auf einer Geräte-Grundplatte (1) sind wenigstens eine Tragschiene (2) und wenigstens eine Anschlussleiste (3, 4) angebracht. Schaltgeräte, wie Schützen, Relais usw., werden auf der Tragschiene (2) befestigt. Die Anschlüsse der Schaltgeräte werden direkt mit der Anschlussleiste (3, 4) verbunden. In einer Trägerplatte (5) sind rasterförmig angeordnete Kontaktelemente (6) gehalten, die über Leitungen (L) je mit einem der Kontakte der Anschlussleiste (3, 4) in vorbestimmter Zuordnung verbunden sind. Die elektrische Verknüpfung der Schaltgeräte untereinander erfolgt durch Ueberbrückungsleiter, die auf der Trägerplatte (5) zwischen den Kontaktelementen (6) angeschlossen werden. Damit sind Aenderungen der Schaltung in einfacher Weise möglich, ohne dass die Verdrahtung zu den Schaltgeräten geändert werden muss.

Fig. 1

**Beschreibung**

Elektrische Schalteinheit mit mehreren Schaltgeräten

Die Erfindung bezieht sich auf eine elektrische Schalteinheit mit mehreren Schaltgeräten und mit einer Einrichtung zum elektrischen Verbinden der Schaltgeräte untereinander.

In bekannten elektrischen Schalteinheiten, z.B. Schaltschränken oder Teilen von solchen, insbesondere in Steuerungen, die mehrere Schaltgeräte, wie Schütze, Relais usw., enthalten, sind die einzelnen Schaltgeräte miteinander und mit Ein-/Ausgängen durch eine Verdrahtung verbunden, die anhand eines Verdrahtungsplans gefertigt und angebracht wird. Das Ausarbeiten des Verdrahtungsplans für jede individuelle Schalteinheit, z.B. Steuerung, und das Fertigen und Anbringen der Verdrahtung sind mit einem erheblichen Arbeitsaufwand verbunden. Zudem sind Aenderungen, falls solche erforderlich sind, sehr umständlich, da jeweils einzelne Leitungen an den Schaltgeräten gelöst und neu verlegt oder ersetzt werden müssen.

Aus dem Dokument FR-A-2 223 937 ist eine Schalteinheit der eingangs angegebenen Art bekannt, in welcher mehrere Schaltgeräte auf eine Anordnung von Stekkerstiften aufgesteckt sind, die auf einer isolierenden Trägerplatte gehalten sind. Die Steckerstifte sind untereinander durch Leiter verbunden, deren Enden um die Steckerstifte gewickelt sind. In einer solchen Schalteinheit sind nur steckbare modulförmige Schaltgeräte verwendbar, welche zu den Steckerstiften passende Steckerbuchsen im passenden Raster aufweisen.

Die Aufgabe der vorliegenden Erfindung besteht darin, eine Schalteinheit derart auszubilden, dass sie sich mit beliebigen konventionellen Schaltgeräten in einfacher, rationeller Weise, mit geringstmöglichen Montagezeiten und Montagekosten, herstellen lässt und zudem die Möglichkeit bietet. Aenderungen der Schaltung in einfacher Weise ohne Neuverlegen von Leitungen vorzunehmen.

Die erfindungsgemässe Schalteinheit der eingangs angegebenen Art, mit der die Aufgabe gelöst wird und in der die Einrichtung zum elektrischen Verbinden der Schaltgeräte untereinander eine Anordnung von Kontaktelementen und Leiter enthält, die jeweils einzelne der Kontaktelemente miteinander verbinden, ist dadurch gekennzeichnet, dass die Schaltgeräte über Leitungen mit den Kontaktelementen verbunden sind und die Kontaktelemente beieinander liegen, dass jedes Kontaktelement zwei steckbare Anschlussstellen für je einen der genannten Leiter aufweist und dass diese Leiter steckbare Ueberbrückungsleiter sind, die je zwei der Kontaktelemente miteinander verbinden.

Bei der Herstellung einer solchen Schalteinheit werden die Schaltgeräte durch eine unverknüpfte Verdrahtung direkt mit den beieinander liegenden Kontaktelementen verbunden. So wird zunächst eine vorkonfektionierte Schalteinheit, z.B. Steuerung, erhalten.

Die elektrische Verknüpfung der Geräteanschlüsse erfolgt dann durch einfache Brückenlegung zwischen den beieinander liegenden Kontaktelementen, die den Geräteanschlüssen in vorbestimmter Weise fest zugeornet sind. Dadurch, dass jedes Kontaktelement zwei Anschlussstellen für je einen Ueberbrückungsleiter aufweist, sind die Schaltgeräte völlig frei miteinander verknüpfbar. Die steckbaren Ueberbrückungsleiter lassen sich anhand eines Verknüpfungsplans leicht und rasch anbringen. Wenn eine Aenderung der Schaltung vorgenommen werden soll, ist es ebenso einfach, Ueberbrückungsleiter wieder abzunehmen und anders anzuordnen oder zu ersetzen.

Die Kontaktelemente sind vorzugsweise rasterförmig angeordnet und von einer Trägerplatte getragen. Die Trägerplatte mit den Kontaktelementen wird nachstehend auch als Verknüpfungsmodul bezeichnet. Die Ueberbrückungsleiter können dann mit Abmessungen entsprechend den Abständen der Kontaktelemente im Raster vorgefertigt werden.

Eine andere vorteilhafte Möglichkeit besteht darin, für verschiedene Schalteinheiten bzw. Steuerungen auswechselbare Programmplatten vorzusehen, welche je mehrere Ueberbrückungsleiter in jeweils vorbestimmter Anordnung auf Oberteilen der Kontaktelemente tragen und auf einer Trägerplatte anbringbar sind, in welcher Unterteile der Kontaktelemente gehalten sind, mit denen die Oberteile zusammengesteckt werden.

Die Leitungen von den Kontaktelementen des Verknüpfungsmoduls können direkt zu den jeweils entsprechenden Geräteanschlüssen führen. Für die Montage zweckmässiger ist es jedoch, diese Leitungen über eine oder mehrere Anschlussleisten (mit Steckkontakten oder Schraubklemmen) zu führen, die auf einer Geräte-Grundplatte angebracht werden, welche wenigstens eine Tragschiene für Schaltgeräte trägt. Bei einer solchen Ausführung sind dann lediglich die Schaltgeräte auf der Tragschiene zu befestigen und die Geräteanschlüsse über kurze Verbindungen an die Anschlussleiste anzuschliessen, welche schon fest mit dem Verknüpfungsmodul verdrahtet ist. Die Trägerplatte des Verknüpfungsmoduls kann ebenfalls auf der Geräte-Grundplatte befestigt sein. Sie kann aber auch, vorzugsweise schwenkbar, in einem Abstand über der Geräte-Grundplatte und über den auf derselben befestigten Schaltgeräten gehalten sein.

Ausführungsbeispiele der erfindungsgemässen Schalteinheit werden nachstehend anhand der Zeichnungen näher erläutert. In diesen zeigen, rein schematisch,

Fig. 1 eine perspektivische Skizze von Teilen einer erfindungsgemässen Schalteinheit,

Fig. 2 eine Vorderansicht des Verknüpfungsmoduls der Schalteinheit gemäss Fig. 1,

Fig. 3 eine Seitenansicht und

Fig. 4 eine Draufsicht einer in der Schalteinheit gemäss Fig. 1 verwendbaren Anschlussleiste,

Fig. 5 eine Geräte-Grundplatte mit angeformter Tragschine und angeformten Anschlussleisten in Draufsicht,

Fig. 6 eine Draufsicht auf ein mit der Geräte–Grundplatte von Fig. 5 verwendbares Verknüpfungsmodul,

Fig. 7 eine Draufsicht und

Fig. 8 eine Seitenansicht einer anderen Ausführungsform einer erfindungsgemässen Schalteinheit und

Fig. 9 eine perspektivische Skizze eines Verknüpfungsmoduls mit auswechselbarer Programmplatte.

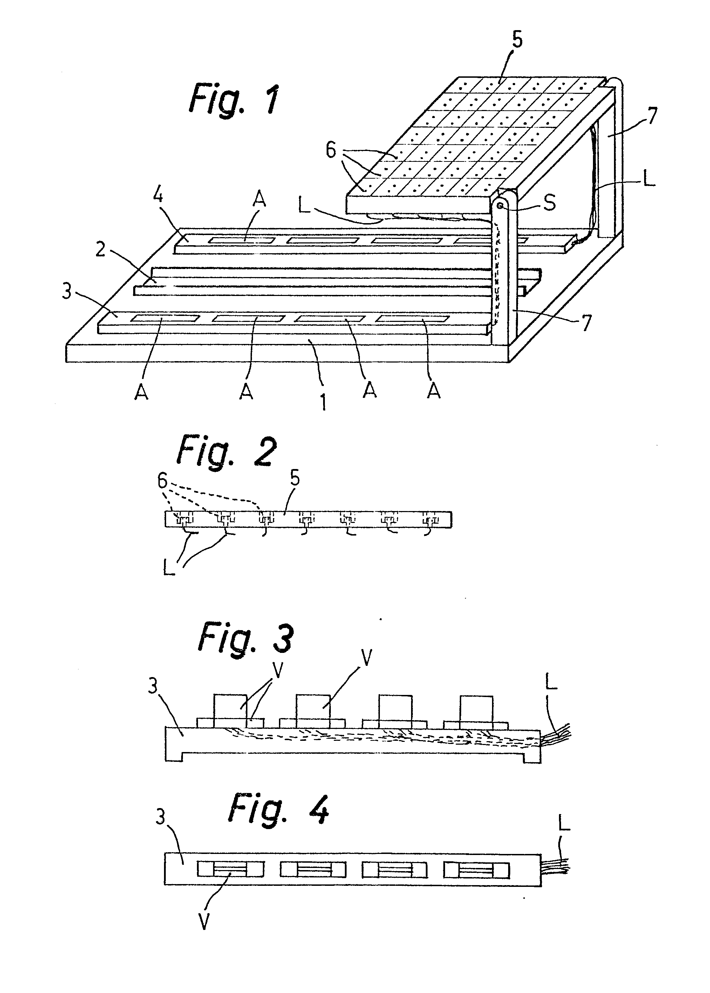

Die Fig. 1 zeigt eine Geräte-Grundplatte 1, auf der eine Tragschiene 2 und zwei Anschlussleisten 3 und 4 mit Anschlussstellen A befestigt sind. Ein Verknüpfungsmodul, bestehend aus einer Trägerplatte 5 und rasterförmig in derselben angeordneten Kontaktelementen 6, ist in einem Abstand über der Geräte-Grundplatte 1 und parallel zu derselben angeordnet. Die Trägerplatte 5 ist um eine zur Geräte-Grundplatte 1 parallele Achse S schwenkbar an auf der Geräte-Grundplatte befestigten Pfosten 7 gehalten. Durch Verschwenken der Trägerplatte 5 können Schaltgeräte, die unter der Trägerplatte liegen, zugänglich gemacht werden. An jedes Kontaktelement 6 ist an der Unterseite der Trägerplatte 5 je eine Leitung L angeschlossen, die zu einem zugeordneten Kontakt in einer der Anschlussleisten 3 oder 4 führt. Die Schaltgeräte (nicht dargestellt), z.B. Leistungsschütze, Hilfsschalter, Bimetall-Relais, Zeitrelais, werden auf der Tragschiene 2 befestigt, und zumindest die Steueranschlüsse dieser Schaltgeräte werden über vorkonfektionierte kurze Verbindungen an die Anschlussleisten 3, 4 angeschlossen, wodurch sie zwangsläufig mit jeweils zugeordneten Kontaktelementen 6 in der Trägerplatte 5 verbunden werden. Die Hauptstromkontakte, die nicht verknüpft zu werden brauchen, können auch direkt angeschlossen werden. Die Anschlussleisten 3 und 4 sind so angeordnet, dass sie unmittelbar vor den auf der Tragschiene 2 befestigten Schaltgeräten liegen. Die Kontakte der Anschlussleisten 3 und 4 können Steckerunterteile oder auch Schraubklemmen sein.

Das elektrische Verknüpfen der Schaltgeräte untereinander erfolgt durch Ueberbrückungsleiter (in Fig. 1 nicht dargestellt) auf der Oberseite der Trägerplatte 5. Jedes Kontaktelement 6 besitzt an der Oberseite der Trägerplatte 5 zwei Aufnahmeöffnungen. In jede dieser Aufnahmeöffnungen kann jeweils ein Ende eines Ueberbrückungsleiters eingesteckt werden, der zwei Kontaktelemente 6 miteinander verbindet. Notwendige Ein- und Ausgangsleitungen können ebenfalls an den betreffenden Kontaktelementen 6 angeschlossen werden.

Aenderungen der elektrischen Schaltung einer Schalteinheit sind ohne Neuverlegen von Leitungen leicht möglich, es braucht hierzu nur die Anordnung der Ueberbrückungsleiter auf der Trägerplatte 5 entsprechend geändert zu werden. Ebenso sind nachträgliche Erweiterungen einer Schalteinheit möglich, wenn die Anschlussleisten 3, 4 genügend Kontakte zum Anschliessen eines oder mehrerer zusätzlicher Schaltgeräte aufweisen. Die Uberbrückkungsleiter zum Verknüpfen von solchen zusätzlichen Schaltgeräten können schon in vornhinein oder ebenfalls nachträglich auf der Trägerplatte 5 angebracht werden.

Die Fig. 3 und 4 zeigen mit etwas mehr Einzelheiten eine mögliche Ausführung der Anschlussleiste 3 (oder 4). Die Anschlussleiste gemäss Fig. 3 und 4 besitzt ein Gehäuse aus Kunststoff, das als Führung für die Leitungen L vom Verknüpfungsmodul dient und auf dem die Unterteile V von vier Steckverbindungen angeordnet sind. Der Unterteil jeder Steckverbindung ist in zwei unabhängige Stecker zu beispielsweise 4 oder 6 Polen aufgeteilt. Stattdessen könnten natürlich auch einfache Stecker mit jeweils 8 bzw. 12 Polen verwendet werden.

Andere Anschlussleisten könnten anstelle der Mehrfachstecker einzelne Durchgangs- oder Durchführungsklemmen aufweisen.

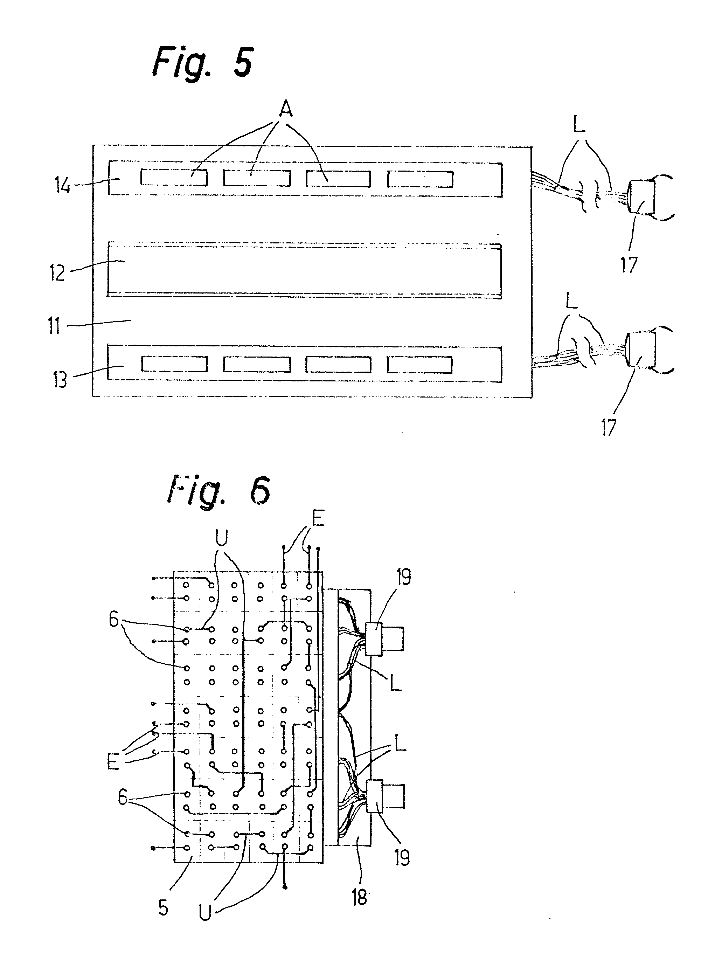

Die Fig. 5 zeigt Anschlussleisten 13 und 14, die an eine Geräte-Grundplatte 11 aus Kunststoff angeformt sind. Eine DIN-Tragschiene 12 kann ebenfalls aus Kunststoff bestehen und an die Geräte-Grundplatte 11 angeformt sein. Die Leitungen L sind bei dieser Ausführung zweckmässig mit Steckern 17 versehen, die mit dem Verknüpfungsmodul verbunden werden.

Ein hierfür geeignetes Verknüpfungsmodul, bei dem die Trägerplatte 5 und die Kontaktelemente 6 gleich ausgebildet sind wie in Fig. 1 und 2, ist in Fig. 6 gezeigt. An einem an der Trägerplatte 5 angebrachten Halterahmen 18 sind zwei Steckerunterteile 19 gehalten, an welche die von den einzelnen Kontaktelementen 6 kommenden Leitungen L angeschlossen sind.

In Fig. 6 sind auch einige Ueberbrückungsleiter U eingezeichnet, die jeweils in einer gegebenen, für eine bestimmte Steuerung erforderlichen Anordnung je zwei Kontaktelemente 6 miteinander verbinden. An einige der Kontaktelemente 6 sind ferner Ein- oder Ausgangsleitungen E direkt angeschlossen.

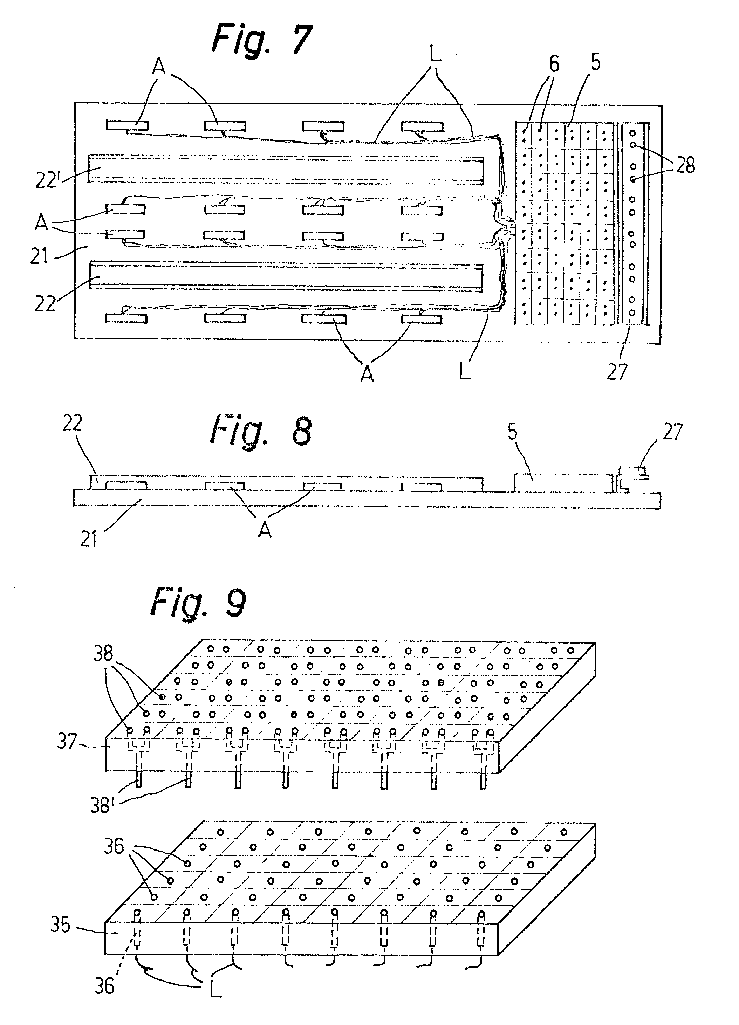

Die Ein- und Ausgangsleitungen können gewünschtenfalls auch über zusätzliche Anschlüsse (Steckverbindungen oder Schraubklemmen) angeschlossen werden. Eine entsprechende Ausführungsform ist in den Fig. 7 und 8 dargestellt. Die Einrichtung gemäss Fig. 7 und 8 besitzt eine Geräte-Grundplatte 21, auf der zwei tragschienen 22, 22' und auf beiden Seiten jeder Tragschiene je vier Anschlussleisten A angebracht sind. Die Tragschienen 22 und 22' dienen zur Befestigung von Schaltgeräten (nicht dargestellt), deren Anschlüsse wie bei den zuvor beschriebenen Ausführungsformen mit den Anschlussleisten A verbunden werden. Jeder Kontakt der Anschlussleisten A ist mit einem jeweils zugeordneten Kontaktelement 6 eines Verknüpfungsmoduls verbunden. Das Verknüpfungsmodul, mit der Trägerplatte 5, ist im Prinzip gleich ausgebildet wie das anhand der Fig. 1 und 2 beschriebene, jedoch ist die Trägerplatte 5 hier direkt auf der Geräte-Grundplatte 21 befestigt. Neben der Trägerplatte 5 ist auf der Geräte-Grundplatte 21 eine gesonderte Anschlussleiste 27 mit jeweils zweipoligen Kontaktelementen 28 für den Anschluss von Einund Ausgangsleitungen befestigt. Das Verknüpfen der Schaltgeräte untereinander erfolgt wieder durch Ueberbrückungsleiter auf der Oberseite der Trägerplatte 5. Weitere Ueberbrückkungsleiter werden zwischen den Ein-/Ausgangskontaktelementen 28 und denjenigen Kontaktelementen 6 angebracht, die mit einer Eingangs- oder Ausgangsleitung zu verbinden sind.

Die Fig. 9 zeigt eine Trägerplatte 35 mit rasterförmig darin angeordneten Kontaktelement-Unterteilen 36, auf die eine Programmplatte 37 mit in gleicher Weise rasterförmig angeordneten Kontaktelement-Oberteilen 38 auswechselbar aufgesteckt werden kann. Die Trägerplatte 35 mit den Kontaktelement-Unterteilen 36 kann anstelle der Trägerplatte 5 mit den Kontaktelementen 6 verwendet werden. An die Kontaktelement-Unterteile 36 sind unten wieder die Leitungen L angeschlossen, die (vorzugsweise wie beschrieben über eine oder mehrere Anschlussleisten) zu jeweils zugeordneten Anschlüssen der Schaltgeräte führen. Die gewünschten Ueberbrückungsleiter (nicht dargestellt) werden in vorbestimmter Anordnung auf der Oberseite der Programmplatte 37 in die Kontaktelement-Oberteile 38 gesteckt, die zu diesem Zweck je zwei Aufnahmeöffnungen aufweisen. An der Unterseite der Programmplatte 37 weist jeder Kontaktelement-Oberteil 38 je einen nach unten ragenden Stift 38' auf. Die Stifte 38' werden in entsprechende Aufnahmeöffnungen in den Kontaktelement-Unterteilen 36 der Trägerplatte 35 gesteckt, wodurch dann die Kontaktelement-Unterteile 36 durch die Uberbrückungsleiter der Programmplatte 37 in der vorbestimmten Anordnung miteinander verbunden sind. Natürlich könnten anstelle der Stifte 38' an den Kontaktelement-Oberteilen 38 und Aufnahmeöffnungen in den Kontaktelement-Unterteilen 36 ebensogut umgekehrt Stifte an den Kontaktelement-Unterteilen 36 und entsprechende Aufnahmeöffnungen in den Kontaktelement-Oberteilen 38 vorgesehen sein.

Bei der Auführungsform gemäss Fig. 9, mit der Programmplatte 37, ist es in vorteilhafter Weise möglich, die Verknüpfung von Schaltgeräten an einem von der Schalteinheit getrennten Ort vorzubereiten. Das Anbringen der Ueberbrückungsleiter kann automatisiert werden. Für gleiche elektrische Steuerungen, die in grösseren Serien gefertigt werden, kann das Verknüpfungsdiagramm gespeichert werden und ist dann jederzeit wieder abrufbar, wenn gleiche Steuerungen wieder benötigt werden. Die Programmplatte kann rasch und einfach gegen eine Progammplatte mit anderer vorbestimmter Anordnung der Uberbrückungsleiter ausgewechselt werden, um eine elektrische Steuerung zu ändern bzw. um mit einer gegebenen Steuerung verschiedene Funktionen zu fahren.

## Patentansprüche

1. Elektrische Schalteinheit mit mehreren Schaltgeräten und mit einer Einrichtung zum elektrischen Verbinden der Schaltgeräte untereinander, welche Einrichtung eine Anordnung von Kontaktelementen (6; 36, 38) und Leiter (U) enthält, die jeweils einzelne der Kontaktelemente miteinander verbinden, dadurch gekennzeichnet, dass die Schaltgeräte über Leitungen (L) mit den Kontaktelementen (6; 36, 38) verbunden sind und die Kontaktelement (6; 36, 38) beieinander liegen, dass jedes Kontaktelement (6; 36, 38) zwei steckbare Anschlussstellen für je einen der Leiter (U) aufweist und dass diese Leiter (U) steckbare Ueberbrückungsleiter sind, die je zwei der Kontaktelemente (6; 36, 38) miteinander verbinden.

2. Schalteinheit nach Anspruch 1, gekennzeichnet durch eine Trägerplatte (5), welche die Kontaktelemente (6) trägt.

3. Schalteinheit nach Anspruch 1 oder 2, dadurch gekennzeichnet, dass die Kontaktelemente (6; 36, 38) rasterförmig angeordnet sind.

4. Schalteinheit nach einem der Ansprüche 1 bis 3, dadurch gekennzeichnet, dass die Ueberbrückungsleiter (U) in die Anschlussstellen der Kontaktelemente (6; 36, 38) steckbar sind.

5. Schalteinheit nach einem der Ansprüche 1 bis 4, dadurch gekennzeichnet, dass benachbart zu den Kontaktelementen (6) gesonderte Eine-/Ausgangskontakte (28) für den Anschluss je eines Ueberbrückungsleiters (U) und einer Ein-/Ausgangsleitung angebracht sind.

6. Schalteinheit nach einem der Ansprüche 1 bis 5, dadurch gekennzeichnet, dass jedes Kontaktelement (36, 38) aus zwei lösbar miteinander zusammengesteckten Teilen besteht, von denen der eine (36) an jeweils eine der genannten Leitungen (L) angeschlossen ist und der andere (38) die beiden Anschlussstellen für je einen der Ueberbrückungsleiter (U) aufweist, dass die einen Teile (36) der Kontaktelemente in einer Trägerplatte (35) getragen sind und dass die anderen Teile (38) der Kontaktelemente in einer auf der Trägerplatte (35) auswechselbar angebrachten Programmplatte (37) getragen sind.

7. Schalteinheit nach einem der Ansprüche 1 bis 6, dadurch gekennzeichnet, dass die genannten Leitungen (L) mittels einer oder mehrer Steckverbindungen (17, 19) an eine der Kontaktelemente (6) tragende Trägerplatte (5) angeschlossen sind.

8. Schalteinheit nach einem der Ansprüche 1 bis 7, dadurch gekennzeichnet, dass die genannten Leitungen (L) über eine oder mehrere Anschlussleisten (3, 4; 13, 14; A) geführt sind.

9. Schalteinheit nach Anspruch 8, dadurch gekennzeichnet, dass die Anschlussleiste bzw. -leisten (3, 4; 13, 14; A) auf einer Geräte-Grundplatte (1; 11; 21) befestigt ist bzw. sind oder mit derselben einstückig ausgebildet ist bzw. sind, welche Geräte-Grundplatte (1; 11; 21) wenigstens eine Tragschiene (2; 12; 22) für Schaltgeräte trägt.

10. Schalteinheit nach Anspruch 9, dadurch gekennzeichnet, dass eine die Kontaktelemente (6) tragende Trägerplatte (5) auf der Geräte-Grundplatte (21) befestigt ist.

11. Schalteinheit nach Anspruch 9, dadurch gekennzeichnet, dass eine die Kontaktelemente (6) tragende Trägerplatte (5) in einem Abstand über der Geräte-Grundplatte (1) etwa parallel zu derselben gehalten ist und bezüglich der Geräte-Grundplatte (1) schwenkbar ist.

12. Schalteinheit nach Anspruch 11, dadurch gekennzeichnet, dass die Schwenkachse (S) zur Geräte--Grundplatte (1) etwa parallel ist.

Fig. 1

Fig. 2

Fig. 3

Fig. 4

0282447

## Fig. 5

## Fig. 6

0282447

Fig. 7

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 397 081 (CHOCHON & NAGAT) * Seite 2, Zeilen 10-36; Seite 3, Zeilen 2-7 * --- | 1 | H 02 B 1/20 H 01 R 29/00 |
| A | US-A-2 768 333 (DOBBRATZ & HADY) * Spalte 1, Zeilen 46-70 * --- | 1 | |
| A | DE-A-2 166 581 (SIEMENS) * Seite 2 * ----- | 6 | |

**RECHERCHIERTE SACHGEBIETE (Int. Cl.4)**

H 02 B
H 01 R
H 05 K

Der vorliegende Recherchenbericht wurde für alle Patentansprüche erstellt

| Recherchenort | Abschlußdatum der Recherche | Prüfer |
|---|---|---|
| DEN HAAG | 06-06-1988 | DAILLOUX C. |